# EUROPÄISCHE PATENTSCHRIFT

(11) **EP 0 959 571 B1**
(45) Veröffentlichungstag und Bekanntmachung des Hinweises auf die Patenterteilung: **29.08.2001**
(21) Anmeldenummer: 99109840.1
(22) Anmeldetag: 19.05.1999
(51) Int. Cl.: H04B 10/148, H04L 27/227

(54) **Vorrichtung für den homodynen Empfang optischer phasenumgetasteter Signale**
Apparatus for the homodyne reception of optical phase shift-keyed signals
Dispositif pour la réception homodyne de signaux optiques modulés par déplacement de phase

(30) Priorität: 22.10.1998 CH 213098
(43) Veröffentlichungstag der Anmeldung: 24.11.1999
(73) Patentinhaber: Contraves Space AG, 8052 Zürich (CH)
(72) Erfinder: Serbe, Christopher Peter, 8553 Hüttlingen (CH)
(74) Vertreter: Hotz, Klaus, Dipl.-El.-Ing./ETH

(56) Entgegenhaltungen:
- EP-A- 0 535 494
- DE-C- 4 110 138
- US-A- 4 037 171
- US-A- 4 423 390
- US-A- 5 007 106
- BARRY J R ET AL: "CARRIER SYNCHRONIZATION FOR HOMODYNE AND HETERODYNE DETECTION OF OPTICAL QUADRIPHASE-SHIFT KEYING" JOURNAL OF LIGHTWAVE TECHNOLOGY, Bd. 10, Nr. 12, 1. Dezember 1992 (1992-12-01), Seiten 1939-1951, XP000367897

## Beschreibung

Die Erfindung bezieht sich auf eine Vorrichtung für den homodynen Empfang optischer phasenumgetasteter Signale nach dem Oberbegriff des Patentanspruchs 1.

Es sind verschiedene Modulationsverfahren für Digitalsignal-Systeme der Telekommunikationstechnik bekannt, die mit Phasenumtastung arbeiten, wobei die für die Demodulation notwendige Trägerrückgewinnung beispielsweise durch Vervielfachung, durch Remodulation oder mit Hilfe des Costas-Regelkreises erfolgen kann. Bei Verwendung solcher oder ähnlicher Systeme in Zusammenhang mit optischen Signalen stellt sich häufig das Problem der Phasenregelung einer lokalen Laserquelle, was relativ aufwendig ist. Ein optischer Homodynempfänger der eingangs erwähnter Art für PSK-Signale ist beispielsweise aus der EP 0 535 494 A2 bekannt.

Es ist daher Aufgabe der Erfindung, eine Vorrichtung für den homodynen Empfang optischer phasenumgetasteter Signale zu schaffen, die zu einer einfacheren Phasenregelung der lokalen Laserquelle führt.

Diese Aufgabe wird in vorteilhafter Weise erfindungsgemäss durch eine Vorrichtung nach Patentanspruch 1 gelöst.

Andere vorteilhafte Ausführungen der Erfindung ergeben sich aus den weiteren abhängigen Ansprüchen.

Die Erfindung wird nachfolgend beispielsweise an Hand einer Zeichnung näher erläutert.
Es zeigt:
- **Fig. 1**: das Blockschaltbild eines In-Phasen-Empfängers nach der Erfindung,
- **Fig. 2**: ein Zustandsdiagramm der Trägerphasen und der Spannung der empfangenen Signale in einem In-Phasen-Empfänger,
- **Fig. 3**: eine schematische Darstellung eines beispielhaften Signals in einem solchen Fall,
- **Fig. 4**: das Blockschaltbild eines kombinierten In-Phasen- und Quadratur-Empfän-gers nach der Erfindung,
- **Fig. 5**: ein Zustandsdiagramm der Trägerphasen und der Spannung der empfangenen Signale in einem In-Phasen- und Quadratur-Empfänger,
- **Fig. 6**: eine schematische Darstellung eines beispielhaften Signals in diesem Fall, und
- **Fig. 7**: eine schematische Darstellung einer Frequenzakquisitionsschaltung.

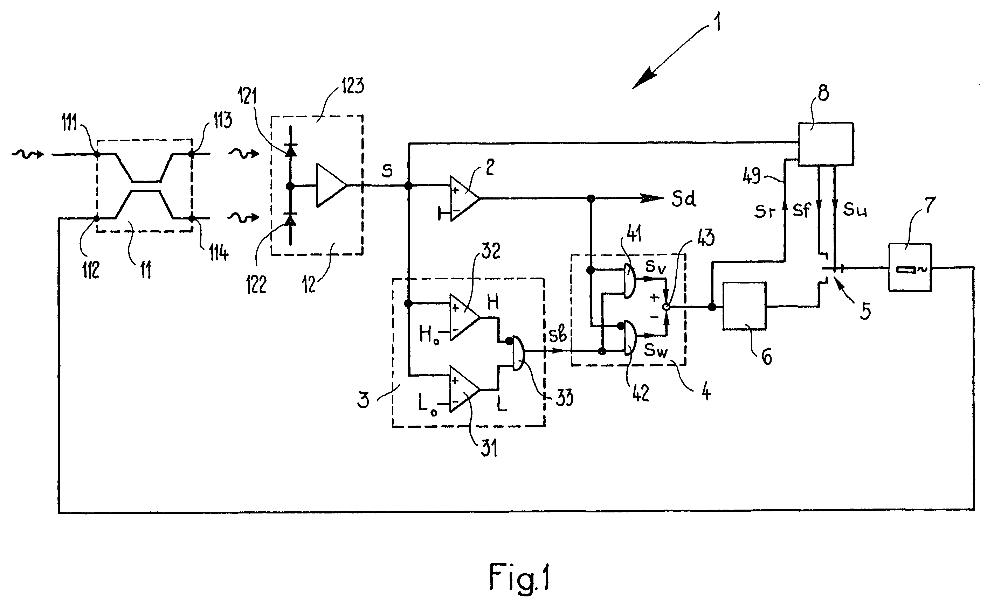

Die erfindungsgemässe Vorrichtung **1** nach **Fig. 1** umfasst einen Überlagerungsempfänger, bestehend aus einem optischen Koppler **11**, auch Hybrid genannt, und einem elektrooptischen Wandler **12**, auch Abgleichschaltung genannt, sowie einen Daten-Entscheider **2**, einen Fenster-Komparator **3**, auch Fenster-Diskriminator genannt, und eine Rückkopplungseinheit **4**, deren Ausgang über einen Umschalter **5**, der einem Filter **6** nachgeschaltet ist, mit dem Steuereingang eines Lokal-Oszillator-Lasers **7** verbunden ist Der die Datensignale Sd liefernde Entscheider **2** und der Komparator **3** sind eingangsseitig an den Ausgang des Überlagerungsempfängers bzw. des E/O-Wandlers **12** angeschlossen. Die Einheit **4** wird eingangsseitig einerseits mit den vom Entscheider **2** gelieferten Datensignalen Sd und andererseits mit dem Ausgangssignal Sb des Komparators **3** beaufschlagt.

Der optische Koppler **11** des miniaturisierten Überlagerungsempfängers weist einen Eingang **111** für einen empfangenen Lichstrahl der Frequenz fe und einen Eingang **112** für einen von der Laserquelle 7 gelieferten Laserstrahl der Frequenz fq auf. Von den zwei Ausgängen des Kopplers **11** liefert der eine Ausgang **113** ein optisches Summensignal und der andere Ausgang **114** ein optisches Differenzsignal. Diese zwei optischen Signale wirken auf je eine lichtempfindliche Diode **121** bzw. **122**, die sie in entsprechende elektrische Signale umwandeln, die in einem sich in der Schaltung **12** befindenden Verstärker **123** addiert werden, dessen Ausgang das analoge Datensignal S liefert. Der Entscheider **2** ist ein als einfacher Regenerator wirkender Nulldurchgangskomparator, der die digitalen, das heisst rechteckförmigen Datensignale Sd abgibt.

Der Fenster-Komparator **3** umfasst zwei Komparatoren **31, 32,** deren Signaleingänge gemeinsam mit dem Ausgangssignal S des E/O-Wandlers **12** beaufschlagt werden, wobei das Ausgangssignal **L** des Komparators **31** und das invertierte Ausgangssignal **H** des Komparators **32** von einem UND-Gatter **33** verknüpft werden. In Fig. 1 sind mit **L**_{**0**} und **H**_{**0**} die Schwellenwerte der Komparatoren **31** bzw. **32** bezeichnet.

Die Rückkopplungseinheit **4** umfasst zwei UND-Gatter **41, 42**, die je einen gemeinsam mit dem Ausgang des Fenster-Komparators **3** verbundenen Eingang aufweisen. Der andere Eingang des UND-Gatters **41** ist mit dem digitalen Datensignal Sd und der andere Eingang des UND-Gatters **42** mit dem invertierten Datensignal Sd beaufschlagt. Die Ausgänge der UND-Gatter **41** und **42** sind mit je einem Eingang eines Differenzverstärkers **43** verbunden, dessen Ausgang über das Filter **6** und den Umschalter **5** mit dem Steuereingang des Lokal-Oszillator-Lasers **7** verbunden ist. Das Loop-Filter **6** kann ein Tiefpass-Filter sein.

Die Vorrichtung umfasst zudem eine zwischen dem Ausgang des E/O-Wandlers **12** und dem anderen Eingang des Umschalters **5** eingefügte Frequenzakquisitionsschaltung **8**, die zudem ausgebildet ist, um den Umschalter 5 zu steuern. Für den Fenster-Komparator 3 nach Fig. 1 gilt folgende Wahrheitstabelle:

| S | Sd | H | L | Sb | Sv | Sw |
|---|---|---|---|---|---|---|
| **- 1** | **0** | **0** | **0** | **0** | **0** | **0** |
| **0-** | **0** | **0** | **1** | **1** | **0** | **1** |
| **0+** | **1** | **0** | **1** | **1** | **1** | **0** |
| **+1** | **1** | **1** | **1** | **0** | **0** | **0** |

In dieser Wahrheitstabelle sind S das vom E/O-Wandler **12** gelieferte analoge Signal, Sd das vom Entscheider **2** gewonnene Datensignal, H und L die Ausgangssignale der Komparatoren **32** bzw. **31**, Sb ein vom Fenster-Komparator **3** geliefertes Synchronisationsbit und Sv und Sw die Ausgangssignale der Gatter **41** bzw. **42**. Das demodulierte Datensignal ist allerdings mit Rauschen, Phasenfehlern und anderen Störungen behaftet.

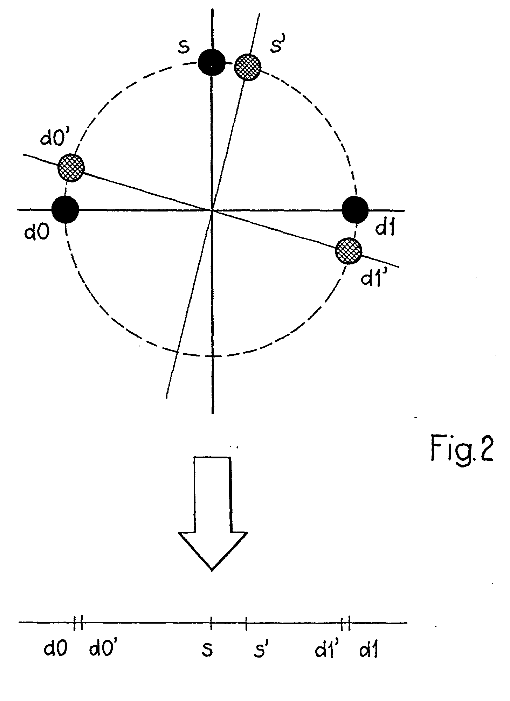

Im Phasenkreis nach **Fig. 2** beziehen sich die Referenz-Achsen auf eine Datenübertragung ohne Phasenfehler, wobei die Punkte d0 und d1 in der realen Achse Signale mit einer Phasenverschiebung von ± 90° darstellen, für die keine Auswertung der Trägerphase stattfindet. Der Punkt S in der imaginären Achse hingegen entspricht einem Signal mit einer Phasenverschiebung von 0°, bei dem eine Auswertung der Trägerphase möglich ist.

Im Phasenkreis nach **Fig. 2** sind auch Punkte d0', d1' und S' dargestellt, die sich auf eine Datenübertragung mit einem Phasenfehler F beziehen, wobei die Punkte d0' und d1' Signale mit einer Phasenverschiebung von 180° darstellen, für die keine Auswertung der Trägerphase stattfindet. Der Punkt S in der Nähe des Punkts S' hingegen entspricht einem Signal mit einer erwarteten Phasenverschiebung von ungefähr 0°, bei dem eine Auswertung der Trägerphase möglich ist.

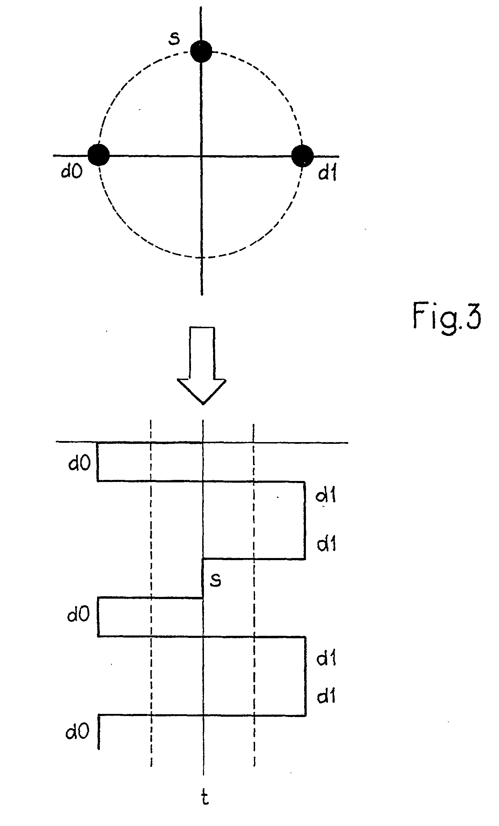

In **Fig. 2** unten sind die entsprechenden Spannungen der Signale d0, d0', S, S', d1' und d1 und in **Fig. 3** mit punktierten geraden Linien links die untere oder niedere Grenzspannung L₀ (**Fig. 1**) und rechts die obere oder höhere Grenzspannung H₀ (**Fig.1**) des Fensterdiskriminators **3** angegeben. Die Empfangsspannung ist bei F > 0 positiv und bei F < 0 negativ. Dadurch kann eine Regelung der Phase F zu 0 erfolgen.

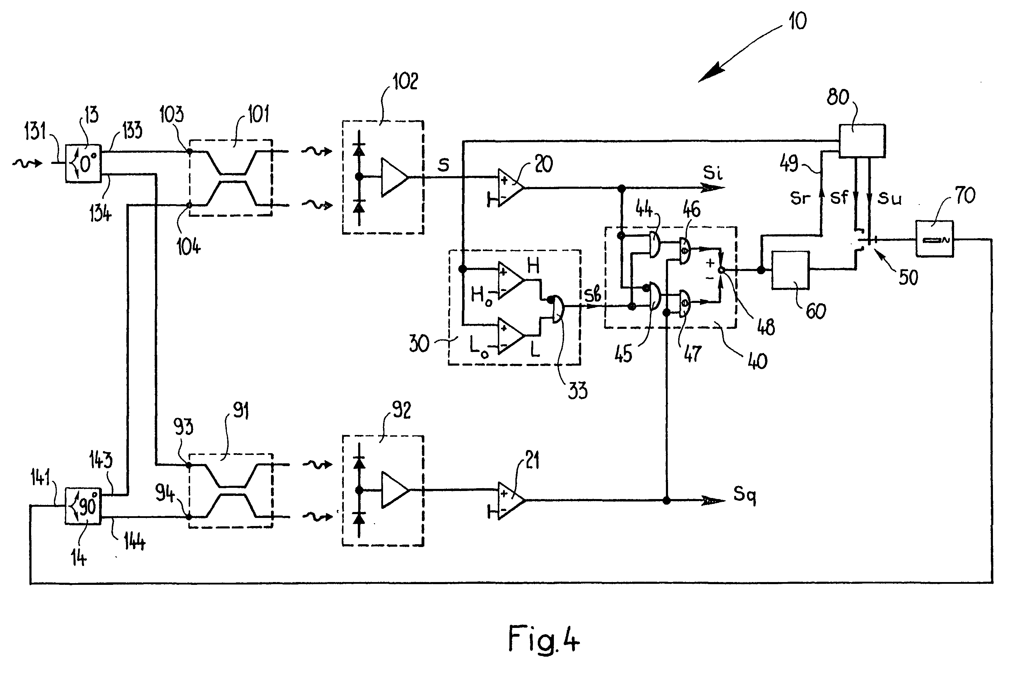

Die erfindungsgemässe Vorrichtung **10** nach **Fig. 4** umfasst einen In-Phasen-Überlagerungsempfänger, einen Daten-Entscheider **20**, einen Fenster-Komparator **30** und eine gesteuerte Rückkopplungseinheit **40**, deren Ausgang über einen Umschalter **50** mit vorgeschaltetem Filter **60** an den Steuereingang eines Lokal-Oszillator-Lasers **70** angeschlossen ist Dabei umfasst dieser Überlagerungsempfänger einen optischen Koppler **101** mit einem nachgeschalteten E/O-Wandler **102**. Der die In-Phasen-Datensignale Si liefernde Entscheider **20** und der Fenster-Komparator **30** sind eingangsseitig an den Ausgang dieses E/O-Wandlers **102** angeschlossen. Die gesteuerte Rückkopplungseinheit **40** wird eingangsseitig einerseits mit den vom Entscheider **20** gelieferten digitalen Datensignalen Si und andererseits mit dem Ausgangssignal des Komparators **30** beaufschlagt.

Die Vorrichtung **10** nach Fig. 4 weist zusätzlich zwei optische Strahlteiler **13** und **14** mit je einem Eingang **131** für das zu empfangende Licht bzw. einem Eingang **141** für das Licht des Lokal-Oszillator-Lasers **70** sowie einen Quadratur-Überlagerungsempfänger mit einem nachgeschalteten Daten-Entscheider **21** auf. Dieser Quadratur-Überlagerungs-empfänger umfasst ebenfalls einen optischen Koppler **91** und einen E/O-Wandler **92**, die gleich oder ähnlich wie die Elemente **101** bzw. **102** in **Fig. 4** oder die Elemente **11** bzw. **12** in Fig. **1** aufgebaut sein können. Auch die Daten-Entscheider **20** und **21** in **Fig. 4** können gleich wie der Entscheider **2** in Fig. **1** aufgebaut sein. Entsprechendes gilt für die Elemente **30, 50, 60, 70** und **80** in **Fig. 4**, die den Elementen **3, 5, 6**, **7** bzw. **8** in **Fig. 1** an sich gleich und unter sich in gleicher Weise geschaltet sein können.

Die optischen Koppler **91** und **101** dieser miniaturisierten an sich bekannten Überlagerungsempfänger weisen je zwei Eingänge **93** und **94** bzw. **103** und **104** auf. Die optischen Strahiteiler **13** und **14** haben je zwei Ausgänge **133, 134** bzw. **143, 144**, wobei die Ausgänge **133** und **143** mit den Eingängen **103** bzw. **104** des Kopplers **101** des In-Phasen-Kanals und die Ausgänge **134** und **144** mit den Eingängen **93** bzw. **94** des Kopplers **91** des Quadratur-Kanals verbunden sind. Der Entscheider **21** ist ebenfalls ein einfacher Regenerator, der als Nulldurchgangskomparator wirkt. Er liefert digitale Datensignale, nämlich die Datensignale Sq des Quadraturkanals, die gemäss der Erfindung zusätzlich dem Steuereingang der gesteuerten Rückkopplungseinheit **40** zugeführt werden.

Die Rückkopplungseinheit **40** umfasst zwei UND-Gatter **44, 45**, die je einen gemeinsam mit dem Ausgang des Fenster-Komparators **30** verbundenen Eingang aufweisen. Der andere Eingang des UND-Gatters **44** ist mit dem digitalen Datensignal Si und der andere Eingang des UND-Gatters **45** mit dem invertierten Datensignal Si beaufschlagt Die Ausgänge der UND-Gatter **44** und **45** sind mit je einem Eingang eines Modulo-2-Addierers **46** bzw. **47** verbunden, die je einen zweiten invertierenden Eingang aufweisen, die gemeinsam mit dem Ausgang des Entscheiders **21** verbunden sind. Die Ausgänge der Addierer **46** und **47** sind mit je einem Eingang eines Differenzverstärkers **48** verbunden, dessen Ausgang über das Filter **60** und den Umschalter **50** mit dem Steuereingang des Lokal-Oszillator-Lasers **70** verbunden ist. Das Filter **60** ist das Loop-Filter des OPLL und kann zum Beispiel als Tiefpass-Filter realisiert werden. Die von der Laserquelle **70** gelieferte Strahlung wird dem Eingang **141** des Quadratur-Strahlteilers **14** zugeführt.

Die Vorrichtung nach **Fig. 4** umfasst zudem eine zwischen dem Ausgang des E/O-Wandlers **102** und dem anderen Eingang des Umschalters **50** eingefügte Frequenzakquisitionsschaltung **80**, die zusätzlich den Umschalter **50** steuert.

Die Schaltungen **101, 102, 20** und **30** nach **Fig. 4** arbeiten genauso wie die entsprechenden Elemente **11, 12, 2** und **3** nach **Fig. 1**.

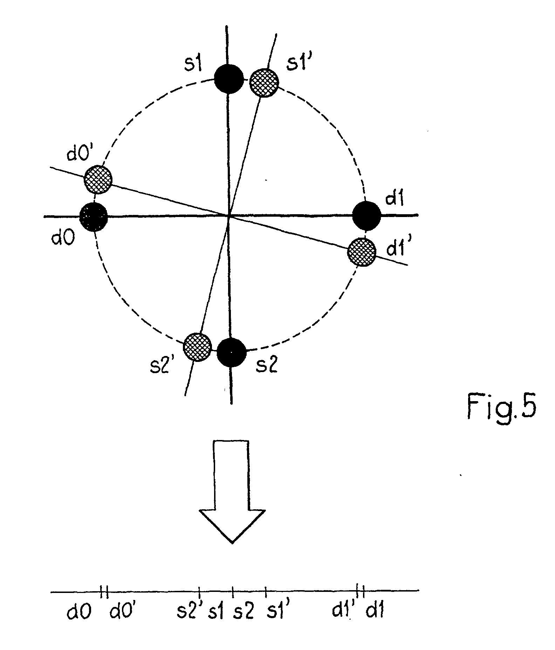

Im Phasenkreis nach Fig. 5 beziehen sich die Referenz-Achsen auf eine Datenübertragung ohne Phasenfehler, wobei die Punkte d0 und d1 in der realen Achse Signale mit einer Phasenverschiebung von ± 90° darstellen, für die keine Auswertung der Trägerphase stattfindet. Die Punkte S1 und S2 in der imaginären Achse hingegen entsprechen Signalen mit einer Phasenverschiebung von 0° bzw. 180°, bei denen eine Auswertung der Trägerphase möglich ist.

Im Phasenkreis nach **Fig. 2** sind auch Punkte d0', d1' und S1', S2' dargestellt, die sich auf eine Datenübertragung mit einem Phasenfehler F beziehen, wobei die Punkte d0' und d1' Signale mit einer Phasenverschiebung von ± 90° darstellen, für die keine Auswertung der Trägerphase stattfindet. Die Punkte S1' und S2' in der Nähe der Punkte S1 bzw. S2 hingegen entsprechen Signalen mit einer Phasenverschiebung von 0° bzw. 180°, beidenen eine Auswertung der Trägerphase möglich ist.

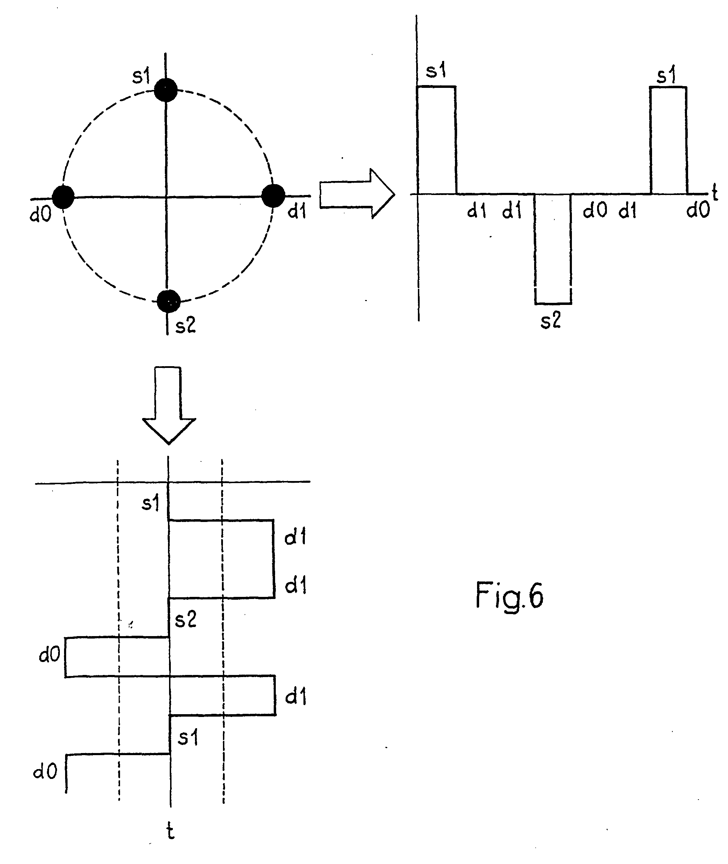

In **Fig. 5** unten sind die entsprechenden Spannungswerte der Signale d0; d0'; S2'; S1, S2; S1'; d1'; d1 und in **Fig. 6** unten mit punktierten parallelen Linien die untere Grenzspannung L₀ (**Fig. 4**) und die höhere Grenzspannung H₀ (**Fig. 4**) des Fensterdiskriminators **30** für den In-Phasen-Kanal und rechts für den Quadraturkanal angegeben. Die Empfangsspannung ist bei F > 0 positiv und bei F < 0 negativ. In **Fig. 6** rechts sind die entsprechenden Spannungswerte der Signale S1, d1, d1, S2, d0, d1, S1, d0 dargestellt.

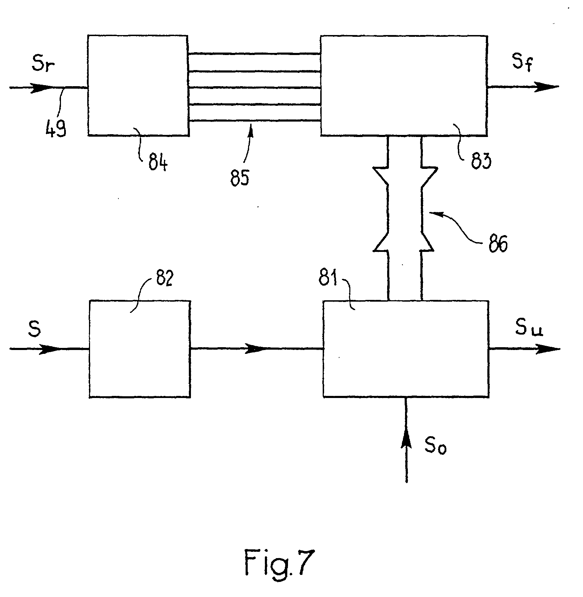

Die Frequenzakquisitionsschaltung **8** oder **80** nach **Fig. 7** umfasst einen Mikroprozessor **81**, an den ein Detektor **82** und eine Steuerschaltung **83** angeschlossen sind, und eine Filterbank **84**. Der Mikroprozessor **81** wird mit einem Startsignal S0 gestartet. Der an den E/O-Wandler **12** bzw. **102** angeschlossene Detektor **82** entscheidet, ob ein echtes Signal S vorhanden ist oder nicht, und liefert dementsprechend ein Signal 1 oder 0 an den Mikroprozessor **81**. Die Filterbank **84**, die mit dem über eine Leitung **49** geführten Ausgangs-signal Sr der Rückkopplungseinheit **4** bzw. **40** beaufschlagt wird und eine Anzahl n Frequenzfehlerbereiche, z. B. bis **10**, unterscheiden kann, liefert über einen Bus oder Leitungen **85** entsprechende Diskriminierungssignale an die Steuerschaltung **83,** die über einen Bus **86** mit dem Mikroprozessor **81** verbunden ist, der ein Steuersignal Su für den Umschalter **5** bzw. **50** liefert. Die Steuerschaltung **83** ihrerseits liefert ein Signal Sf, das über den Umschalter 5 bzw. **50** dem Lokal-Oszillator-Laser 7 bzw. **70** zugeführt werden kann.

Die Frequenzakquisitionsschaltung **8** bzw. **80** funktioniert forlgendermassen:

Das Eingangssignal S0 startet zunächst einen groben Frequenzsuchlauf des LO-Lasers **7** bzw. **70**, der dann durch die Frequenzakquisitionsschaltung 8 bzw. 80 über den Umschalter **5** bzw. **50** auf Steuerung geschaltet wird.

Wenn in einem zweiten Verfahrensschritt beim Eingang des Detektors **82** ein Signal S festgestellt wird, das heisst, wenn der LO-Laser sich nun in der Nähe der Soll-Frequenz befindet, wird durch den Mikroprozessor **81** die Abstimmgeschwindigkeit deutlich reduziert, um einen Feinsuchlauf zu starten.

In einem dritten Verfahrensschritt wird der Frequenzfehler, das heisst, das Signal Sr auf **0** geregelt. In weiterer Ausgestaltung der Erfindung kann das Signal Sr auch über die Leitung **49** der Frequenzakquisitionsschaltung **8** bzw. **80** zur Auswertung geführt werden.

Wenn schliesslich der Mikroprozessor **81** feststellt, dass die Frequenzakquisition erreicht wurde, schaltet die Frequenzakquisitionsschaltung **8** bzw. **80** auf Normalbetrieb und ab diesem Moment wird der LO-Laser **7** bzw. **70** nun über das Loop-Filter **6** bzw. **60** geregelt. Die Frequenzakquisition wird beispielsweise erreicht, wenn das Signal Sr nicht mehr schwingt.

Die erwähnten Überlagerungsempfänger sind an sich bekannte miniaturisierte Bauteile (optical hybrid + balanced receiver). Die Frequenzakquisitionsschaltung **8** bzw. **80** bewirkt, dass die Frequenz fq des von der Laserquelle gelieferten unmodulierten Laserstrahls geregelt wird, um eine Übereinstimmung dieser Frequenz fq mit der Frequenz fe des empfangenen modulierten Lichtstrahls zu erreichen. Durch die Fensterdiskriminator-Schaltung wird eine Phasenregelung der lokalen Laserquelle durchgeführt, bis ein Einrasten der Phase erreicht wird. Bei Ausfall der Frequenzsynchronisierung wird der Umschalter **5** oder **50** wieder auf die Frequenzakquisitionsschaltung **8** bzw. **80** geschaltet. Wenn die Frequenzsynchronisierung erreicht ist, schaltet der Umschalter nochmals auf die Fensterdiskriminator-Schaltung um.

Die Arbeitsweise der erfindungsgemässen Vorrichtung ist somit weitgehend unabhängig vom angewendeten Algorithmus für die Frequenzakquisition.

Die Verwendung der Fensterdiskriminator-Schaltung bzw. des Fensterkomparators für den homodynen Empfang optischer phasenumgetasteter Signale ermöglicht die Bestimmung der Phase des optischen Trägersignals und damit die Phasenregelung der lokalen Laserquelle.

Die Phasenregelung greift dabei auf orthogonale Trägerzustände zurück, die entweder injiziert werden, oder aber bereits, wie beim QPSK-Verfahren (Quadrature Phase Shift Keying), per se vorhanden sind. Bei der erfindungsgemässen Vorrichtung wird also der Schwellenwertentscheider des Standardempfängers um zwei oder mehrere zusätzliche Schwellen erweitert. Die Vorrichtung kann auch beim QASK-Verfahren (Quadrature Amplitude Shift Keying) oder beim BPSK-Verfahren (Binary Phase Shift Keying) mit möglichen Synchronisationssignalen verwendet werden.

Durch die Erfindung wurde zudem die Erkenntnis gewonnen, dass die Verbindung **49** zwischen dem Ausgang der Rückkopplungseinheit **4** bzw. **40** und der Frequenzakquisitionsschaltung **8** bzw. **80** auch entfallen kann. Sie wird vorzugsweise gebraucht, wenn die Abstimmungsgeschwindigkeit gross im Verhältnis zur Bandbreite der optischen Regelschleife ist.

Die durch die Eingänge **111** bzw. **131** empfangene modulierte Strahlung kann zirkular polarisiert sein. Mit Hilfe einer vorgeschalteten λ/4-Platte kann eine Umsetzung auf eine linear polarisierte Welle erfolgen. Am Ausgang des LO-Lasers **7** bzw. **70** können zusätzliche Mittel zur Regelung der Polarisation eingesetzt werden.

Die erfindungsgemässe Vorrichtung zeichnet sich in hervorragender Weise durch eine grosse langzeitige Stabilität aus. Zudem ist ihre Realisierung sehr wenig aufwendig.

## Patentansprüche

1. Vorrichtung für den homodynen Empfang optischer phasenumgetasteter Signale mit einem Überlagerungsempfänger (**11, 12; 101, 102; 91, 92**), der mit einem Eingang (**111; 103; 93**) für einen Lichtstrahl und einem Eingang (**104; 94**) für ein Lasersignal eines Lokal-Oszillator-Lasers (**7; 70**) versehen ist, mit einer an den Ausgang des Überlagerungsempfängers (**11, 12; 101, 102; 91, 92**) angeschlossenen Frequenzakquisitionsschaltung (**8; 80**), die Signale (**Sf**) für den Lokal-Oszillator-Laser (**7; 70**) liefert, und mit einer zwischen dem Ausgang eines dem Überlagerungsempfänger (**11, 12; 101, 102; 91, 92**) nachgeschalteten Daten-Entscheiders (**2; 20**) und einem zweiten Eingang der Frequenzakquisitionsschaltung (**8; 80**) eingefügten Rückkopplungseinheit (**4; 40**) für eine OPLL-Schleife,
**dadurch gekennzeichnet**, **dass**
zwischen dem Ausgang des Überlagerungsempfängers (**11, 12; 101, 102; 91, 92**) und einem zweiten Eingang der Rückkopplungseinheit (**4; 40**) ein Fensterdiskriminator (**3; 30**) eingefügt ist, dessen Ausgangssignal (**Sb**) zur Regelung des Lokal-Oszillator-Lasers (**7; 70**) dient.

2. Vorrichtung nach Anspruch **1**, **dadurch gekennzeichnet, dass** ein Umschalter (**5**) vorhanden ist, um dem Steuereingang des Lokal-Oszillator-Lasers (**7**) das Ausgangssignal (**Sf**) der Rückkopplungseinheit (**4**) oder das Ausgangssignal der Frequenzakquisitionsschaltungt (**8**) zuzuführen.

3. Vorrichtung nach Anspruch **1** oder **2**, **dadurch gekennzeichnet, dass** dem Umschalter (**5;50**) eine Filterschaltung (**6; 60**) vor- oder nachgeschaltet ist.

4. Vorrichtung nach einem der Ansprüche **1** bis **3, dadurch gekennzeichnet, dass** die Rückkopplungseinheit (**40**) einen Steuereingang aufweist, der an den Ausgang eines für einen Quadratur-Kanal vorgesehenen zusätzlichen Daten-Entscheiders (**21**) angeschlossen ist.

5. Vorrichtung nach einem der Ansprüche **1** bis **4, dadurch gekennzeichnet, dass** mindestens einer dieser Daten-Entscheider (**2; 20; 21**) ein Nulldurchgangskomparator ist.

6. Vorrichtung nach einem der Ansprüche **1** bis **5, dadurch gekennzeichnet, dass** zwei optische Strahlteiler (**13, 14**) und ein zusätzlicher Überlagerungsempfänger (**91, 92**) für einen Quadratur-Kanal vorhanden sind, wobei die Strahlteiler (**13, 14**) an die zwei Überlagerungsempfänger (**101, 102, 91, 92**) angeschlossen sind, und wobei der Ausgang des Lokal-Oszillator-Lasers (**70**) mit dem Eingang eines dieser Strahlteiler (**14**) verbunden ist.

7. Vorrichtung nach einem der Ansprüche **1** bis **6**, **dadurch gekennzeichnet, dass** der Fensterdiskriminator (**3; 30**) zwei oder mehrere Schwellen aufweist.

8. Vorrichtung nach einem der Ansprüche **2** bis **7, dadurch gekennzeichnet, dass** die Vorrichtung einen Detektor (**82**) und eine Steuerschaltung (**83**) umfasst, dass die Frequenzakquisitionsschaltung (**8; 80**) einen Mikroprozessor (**81**) aufweist, der eingangseitig mit diesem Detektor und ausgangsseitig mit dieser Steuerschaltung (**83**) verbunden ist, und dass der Mikroprozessor (**81**) ein Steuersignal (**Su**) für den Umschalter (**5; 50**) liefert, dass der Detektor ausgestaltet ist, um zu entscheiden, ob am Ausgang eines E/O-Wandlers (**12; 102**) des Überlagerungsempfängers ein echtes Signal vorhanden ist oder nicht und dementsprechend ein Steuersignal an den Mikroprozessor (**81**) zu liefern, und dass die Steuerschaltung (**83**) ausgebildet ist, um ein über den Umschalter (**5; 50**) geführtes Steuersignal (**Sf**) für den Lokal-Oszillator-Laser (**7; 70**) zu liefern.

9. Vorrichtung nach Anspruch **8**, **dadurch gekennzeichnet, dass** die Frequenzakquisitionsschaltung (**8; 80**) eine Filterbank (**84**) umfasst, die eingangsseitig mit dem Ausgang der Rückkopplungseinheit (**4; 40**) verbunden ist und mindestens zwei Frequenzbereiche unterscheiden kann, um entsprechende Diskriminierungssignale an die Steuerschaltung (**83**) zu liefern.

10. Vorrichtung nach einem der Ansprüche **1** bis **9**, **dadurch gekennzeichnet, dass** der Überlagerungsempfänger einen optischen Koppler (**11**) mit einem Eingang (**111**) für einen empfangenen Lichstrahl und einen Eingang (**112**) für einen von der Laserquelle (**7**) gelieferten Laserstrahl aufweist, dass der eine Ausgang (**113**) des Kopplers (**11**) ein optisches Summensignal und der andere Ausgang (**114**) ein optisches Differenzsignal liefert, und dass diese zwei optischen Signale auf je eine lichtempfindliche Diode (**121, 122**) wirken, die sie in entsprechende elektrische Signale umwandeln, die in einem sich in der Schaltung (**12**) befindenden Verstärker (**123**) addiert werden, dessen Ausgang ein analoges Datensignal (**S**) liefert.

## Claims

1. Apparatus for the homodyne reception of phase shift-keyed signals with a heterodyne receiver (11, 12: 101, 102, 91, 92) which is provided with an input (111; 103; 93) for a light beam and an input (104; 94) for a laser signal of a local oscillator laser (7: 70), with a frequency acquisition circuit (8; 80) connected to the output of the heterodyne receiver (11, 12: 101, 102, 91, 92) and supplying signals (Sf) for the local oscillator laser (7; 70), and with a feedback unit (4; 40) for an OPLL loop inserted between the output of a data discriminator (2: 20) connected after the heterodyne receiver (11, 12; 101, 102; 91, 92) and a second input of the frequency acquisition circuit (8, 80), **characterised in that** a window discriminator (3; 30) the output signal (Sb) of which is used to regulate the local oscillator laser (7; 70) is inserted between the output of the heterodyne receiver (11, 12; 101,102; 91, 92) and a second input of the feedback unit (4; 40).

2. Apparatus according to Claim 1, **characterised in that** a changeover switch (5) is provided for feeding the output signal (Sf) of the feedback unit (4) or the output signal of the frequency acquisition circuit (8) to the control input of the local oscillator laser (7).

3. Apparatus according to Claim 1 or 2, **characterised in that** a filter circuit (6; 60) is connected before or after the changeover switch (5; 50).

4. Apparatus according to Claims 1 to 3, **characterised in that** the feedback unit (40) has a control input connected to the output of an additional data discriminator (21) provided for a quadrature channel.

5. Apparatus according to Claims 1 to 4, **characterised in that** at least one of these data discriminators (2; 20; 21) is a zero-crossing comparator.

6. Apparatus according to Claims 1 to 5, **characterised in that** two optical beam splitters (13, 14) and an additional heterodyne receiver (91,92) for a quadrature channel are present, the beam splitters (13, 14) being connected to the two heterodyne receivers (101, 102, 91, 92) and the output of the local oscillator laser (70) being connected to the input of one of these beam splitters (14).

7. Apparatus according to Claims 1 to 6, **characterised in that** the window discriminator (3; 30) has two or more thresholds.

8. Apparatus according to Claims 2 to 7, **characterised in that** the apparatus has a detector (82) and a control circuit (83), in that the frequency acquisition circuit (8; 80) has a microprocessor (81) connected on the input side to this detector and on the output side to this control circuit (83), and in that the microprocessor (81) supplies a control signal (Su) for the changeover switch (5; 50), in that the detector is configured to decide whether or not a true signal is present at the output of an alternation converter (12; 102) of the heterodyne receiver and accordingly to supply a control signal to the microprocessor (81) and in that the control circuit (83) is configured to supply a control signal (Sf) for the local oscillator laser (7; 70) via the changeover switch (5; 50).

9. Apparatus according to Claim 8, **characterised in that** the frequency acquisition circuit (8, 80) includes a filter circuit (84) connected on the input side to the output of the feedback unit (4, 40) and which can distinguish at least two frequency ranges, in order to supply corresponding discrimination signals to the control circuit (83).

10. Apparatus according to Claims 1 to 9, **characterised in that** the heterodyne receiver has an optical coupler (11) with an input (111) for an incoming light beam and an input (112) for a laser beam supplied by the laser source (7), in that one output (113) of the coupler (11) supplies an optical summation signal and the other output (114) supplies an optical difference signal, and in that each of these two optical signals acts on a light-sensitive diode (121, 122) which converts them into corresponding electrical signals which are added in an amplifier (123) located in the circuit (12) the output of which amplifier (123) supplies an analog data signal (S).

## Revendications

1. Dispositif pour la réception homodyne de signaux optiques modulés par déplacement de phase comportant un récepteur superhétérodyne (11, 12 ; 101, 102; 91, 92), qui est pourvu d'une entrée (111 ; 103 ; 93) pour un rayon lumineux et d'une entrée (104 ; 94) pour un signal laser d'un laser d'oscillateur local (7 ; 70), comportant un circuit d'acquisition en fréquence (8; 80) raccordé à la sortie du récepteur superhétérodyne (11, 12 ; 101, 102 ; 91, 92), qui fournit des signaux (Sf) pour le laser d'oscillateur local (7 ; 70), et comportant une unité de rétroaction (4; 40) pour une boucle optique à asservissement de phase insérée entre la sortie d'un élément de décision des données (2; 20) incorporé après le récepteur superhétérodyne (11, 12 ; 101, 102 ; 91, 92) et une seconde entrée du circuit d'acquisition en fréquence (8; 80),
**caractérisé en ce qu**'entre la sortie du récepteur superhétérodyne (11, 12 ; 101, 102 ; 91, 92) et une seconde entrée de l'unité de rétroaction (4 ; 40) est inséré un discriminateur à fenêtre (3 ; 30) dont le signal de sortie (Sb) sert à réguler le laser d'oscillateur local (7 ; 70).

2. Dispositif selon la revendication 1, **caractérisé en ce qu**'un commutateur (5) est présent pour alimenter l'entrée de commande du laser d'oscillateur local (7 ; 70) avec le signal de sortie (Sf) de l'unité de rétroaction (4) ou le signal de sortie du circuit d'acquisition en fréquence (8).

3. Dispositif selon la revendication 1 ou 2, **caractérisé en ce qu**'est inséré un circuit de filtrage (6 ; 60) avant ou après le commutateur (5; 50).

4. Dispositif selon l'une des revendications 1 à 3, **caractérisé en ce que** l'unité de rétroaction (40) présente une entrée de commande qui est raccordée à la sortie d'un élément de décision des données (21) supplémentaire, prévu pour un canal en quadrature.

5. Dispositif selon l'une des revendications 1 à 4, **caractérisé en ce qu**'au moins un des éléments de décision des données (2 ; 20 ; 21) est un comparateur de passage à zéro.

6. Dispositif selon l'une des revendications 1 à 5, **caractérisé en ce que** deux séparateurs de faisceau optiques (13, 14) et un récepteur superhétérodyne supplémentaire (91, 92) sont présents pour un canal en quadrature, les séparateurs de faisceau (13, 14) étant raccordés aux deux récepteurs superhétérodynes (101, 102, 91, 92), et la sortie du laser d'oscillateur local (70) étant reliée à l'entrée d'un de ces séparateurs de faisceau (14).

7. Dispositif selon l'une des revendications 1 à 6, **caractérisé en ce que** le discriminateur à fenêtre (3 ; 30) présente deux seuils ou plus.

8. Dispositif selon l'une des revendications 2 à 7, **caractérisé en ce que** le dispositif comprend un détecteur (82) et un circuit de commande (83), en ce que le circuit d'acquisition en fréquence (8 ; 80) présente un microprocesseur (81) qui est relié en entrée à ce détecteur et en sortie à ce circuit de commande (83), et en ce que le microprocesseur (81) fournit un signal de commande (Su) pour le commutateur (5 ; 50), en ce que le détecteur est conçu pour décider si un signal réel est présent ou non à la sortie d'un transducteur électrooptique (12; 102) du récepteur superhétérodyne et pour fournir en conséquence un signal de commande au microprocesseur (81), et en ce que le circuit de commande (83) est conçu pour fournir un signal de commande (Sf) amené via le commutateur (5 ; 50) au laser d'oscillateur local (7 ; 70).

9. Dispositif selon la revendication 8, **caractérisé en ce que** le circuit d'acquisition en fréquence (8, 80) comprend un banc de filtrage (84), qui est relié en entrée à la sortie de l'unité de rétroaction (4, 40) et peut différencier au moins deux gammes de fréquence, afin de fournir des signaux de discrimination correspondants au circuit de commande (83).

10. Dispositif selon l'une des revendications 1 à 9, **caractérisé en ce que** le récepteur superhétérodyne comprend un coupleur optique (11) qui présente une entrée (111) pour un rayon lumineux reçu et une entrée (112) pour un rayon laser fourni par la source laser (7), en ce qu'une sortie (113) du coupleur (11) fournit un signal optique composite et l'autre sortie (114) un signal optique différentiel, et en ce que ces deux signaux optiques agissent respectivement sur une diode photosensible (121, 122), qui les convertit en signaux électriques correspondants, qui sont ajoutés dans un amplificateur (123) se trouvant dans le circuit (12) et dont la sortie fournit un signal de données analogique (S).
